# EUROPEAN PATENT APPLICATION

(11) **EP 3 902 280 A1**
(43) Date of publication of application: **27.10.2021**
(21) Application number: 20900686.5
(22) Date of filing: 01.12.2020
(51) Int. Cl.: H04N 21/854

(54) **SHORT VIDEO GENERATION METHOD AND PLATFORM, ELECTRONIC DEVICE, AND STORAGE MEDIUM**

(30) Priority: 27.02.2020 CN 202010124596
(71) Applicant: Beijing Baidu Netcom Science and Technology Co., Ltd, Beijing 100085 (CN)
(72) Inventor: CHEN, Xiangxu, Beijing 100085 (CN)
(74) Representative: Zimmermann, Tankred Klaus
(86) International application number: PCT/CN2020/133018
(87) International publication number: WO 2021/169459

(57) **Abstract**

According to the present disclosure, there is provided a method and platform of generating a short video, an electronic device and a storage medium, which relates to a field of video processing. The method includes: receiving at least one video material clip; obtaining a feature information of a user; and generating the short video based on the at least one video material clip, according to the feature information of the user. The technical solution of the present disclosure may overcome shortcomings of existing technologies, by generating a short video (such as vlog video) automatically and intelligently on the platform of generating a short video. This process does not need manual participation and has no requirement on a level of a generator, and may effectively shorten a generation time of the short video and improve a generation efficiency of the short video.

## Description

### CROSS-REFERENCE TO RELATED APPLICATION(S)

This application claims priority to the Chinese Patent Application No. 2020101245961, filed on February 27, 2020, entitled "METHOD AND PLATFORM OF GENERATING SHORT VIDEO, ELECTRONIC DEVICE, AND STORAGE MEDIUM".

### TECHNICAL FIELD

The present disclosure relates to a field of computer technology, in particular to a field of video processing, and more specifically to a method and platform of generating a short video, an electronic device and a storage medium.

### BACKGROUND

With a popularization of smart phones and a rapid development of live video and short video technologies, videos have increasingly become a main carrier in social media for recording life and disseminating information. Short videos are more and more developed and are favored by the public.

Compared with a short video having a duration of less than 1 minute, a video blog (vlog video, also called vlog short video) has a longer duration of generally 4 to 10 minutes, and has richer content. The vlog video has a high production threshold and a complicated process, including clipping, filter adding, transitioning and music selecting, which has a high requirement on the skills of a human generator. Moreover, in a process of generating the vlog video in the existing technologies, the human generator uploads video materials to a generation platform and edits the video materials manually, such as adding music, adding a transition mode, adding music or clipping manually, etc., so as to generate the short video such as the vlog video.

It may be seen that the entire process of generating the short video, such as the vlog video as described above is achieved by the human generator manually, having a high requirement on the skills of the human generator, a long generation time and a low generation efficiency.

### SUMMARY

In order to solve the technical problem above, the present disclosure provides a method and platform of generating a short video, an electronic device and a storage medium, so as to shorten the time period for generating the short video and improve the efficiency in generating the short video.

In one aspect, according to the present disclosure, there is provided a method of generating a short video, including:
receiving at least one video material clip;
obtaining a feature information of a user; and
generating the short video based on the at least one video material clip, according to the feature information of the user.

In an example, in case of the feature information of the user containing an attribute information of the user, said generating the short video based on the at least one video material clip, according to the feature information of the user includes:
generating a predicted label information for generating the short video, by performing a prediction according to the attribute information of the user and a pre-trained label prediction model; and
generating the short video based on the at least one video material clip, according to the predicted label information.

In another example, in case of the feature information of the user containing a label information selected by the user, said generating the short video based on the at least one video material clip, according to the feature information of the user includes:
generating the short video based on the at least one video material clip, according to the label information selected by the user.

In another example, in case of the feature information of the user containing an attribute information of the user and a label information selected by the user, the generating the short video based on the at least one video material clip, according to the feature information of the user includes:
generating a predicted label information for generating the short video, by performing a prediction according to the attribute information of the user and a pre-trained label prediction model;
determining a target label information, by referring to the predicted label information and the label information selected by the user; and
generating the short video based on the at least one video material clip, according to the target label information.

In another example, the attribute information of the user includes at least one of an age of the user, an occupation of the user, a gender of the user, a category of a history short video watched by the user and a history label information used by the user in generating a history short video.

In another example, the label information selected by the user includes at least one of a topic of the short video, a music style of the short video, a transition mode of the short video, a filter style adopted by the short video and a clipping mode of the short video.

In another aspect, according to the present disclosure, there is provided an apparatus of generating a short video, including:
a receiving module, configured to receive at least one video material clip;
an obtaining module, configured to obtain a feature information of a user; and
a generating module, configured to generate the short video based on the at least one video material clip, according to the feature information of the user.

In another aspect, according to the present disclosure, there is provided an electronic device, including:
at least one processor; and
a memory communicatively connected to the at least one processor, wherein the memory stores instructions executable by the at least one processor, and the instructions, when executed by the at least one processor, cause the at least one processor to implement any preceding method described above.

In another aspect, according to the present disclosure, there is provided a non-transitory computer-readable storage medium having computer instructions stored thereon, wherein the computer instructions allow a computer to implement any preceding method described above.

The embodiments of the present disclosure above have following advantages or beneficial effects. At least one video material clip uploaded by a user is received. The feature information of the user is obtained. The short video is generated based on the at least one video material clip, according to the feature information of the user. The technical solution of the present disclosure may overcome shortcomings of existing technologies, by generating the short video (such as the vlog video) automatically and intelligently on the platform of generating a short video. This process does not need manual participation and has no requirement on the level of the generator, and may effectively shorten the generation time of the short video and improve the generation efficiency of the short video.

Furthermore, according to the present disclosure, if the feature information of the user only contains the attribute information of the user, it is also possible to generate the predicted label information for generating the short video, by performing a prediction according to the attribute information of the user and the pre-trained label prediction model; and the at least one video material clip may be processed to generate the short video according to the predicted label information. This may further generate the short video (such as the vlog video) automatically and intelligently on the platform of generating a short video, and may effectively shorten the generation time of the short video and improve the generation efficiency of the short video.

Furthermore, according to the present disclosure, if the feature information of the user only contains the label information selected by the user, then the at least one video material clip uploaded by the user may be processed to generate the short video according to the label information selected by the user. This may further generate the short video (such as the vlog video) automatically and intelligently on the platform of generating a short video, and may effectively shorten the generation time of the short video and improve the generation efficiency of the short video.

Furthermore, according to the present disclosure, if the feature information of the user contains the attribute information of the user and the label information selected by the user, then the at least one video material clip uploaded by the user may be processed to generate the short video according to the attribute information of the user and the label information selected by the user. This may further generate the short video (such as the vlog video) automatically and intelligently on the platform of generating a short video, and may effectively shorten the generation time of the short video and improve the generation efficiency of the short video.

Other effects of the optional methods above will be described in combination with specific embodiments below.

### BRIEF DESCRIPTION OF THE ACCOMPANYING DRAWINGS

The drawings are used to better understand the solution and do not constitute a limitation to the present disclosure, in which:
FIG. 1 shows a schematic diagram according to some embodiments of the present disclosure;
FIG. 2 shows a schematic diagram according to some embodiments of the present disclosure;
FIG. 3 shows a schematic diagram according to some embodiments of the present disclosure;
FIG. 4 shows a schematic diagram according to some embodiments of the present disclosure;
FIG. 5 shows a schematic diagram according to some embodiments of the present disclosure; and
FIG. 6 shows a block diagram of an electronic device of implementing a method of generating a short video according to some embodiments of the present disclosure.

### DETAILED DESCRIPTION

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

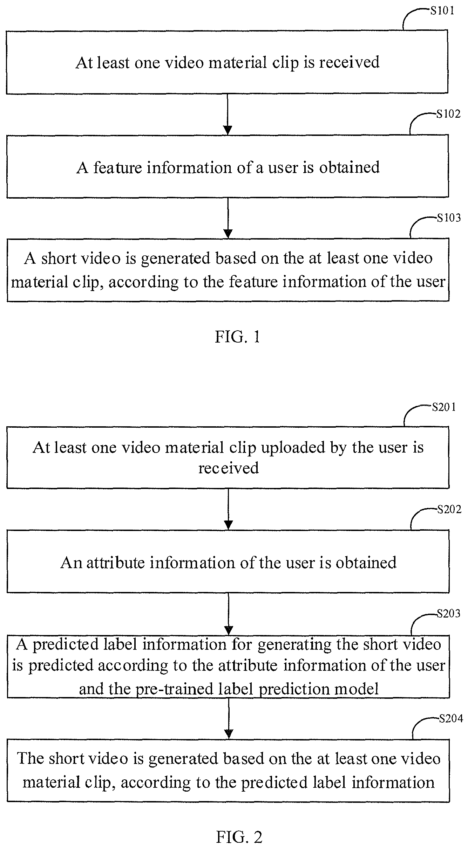

FIG. 1 shows a schematic diagram according to some embodiments of the present disclosure. As shown in FIG. 1, the method of generating a short video according to the embodiments may specifically include following operations.

In operation S 101, at least one video material clip is received.

In operation S102, a feature information of a user is obtained.

In operation S103, a short video is generated based on the at least one video material clip, according to the feature information of the user.

The method of generating a short video in the embodiments may be implemented by a platform of generating a short video. The platform may generate the short video automatically based on the at least one video material clip uploaded by the user and the feature information of the user.

The short video in the embodiments mainly refers to a 4 to 10 minute vlog video. Since the vlog video contains rich content, the vlog video may be generated based on a plurality of video material clips.

The at least one video material clip in the embodiments may be an original video clip shot by the user using a camera or a mobile phone, without being processed. It should be noted that the at least one video material clip may be uploaded by the user according to a sequence of each video material clip in the short video to be generated. Alternatively, it is possible to identify the sequence of each video material clip in the short video to be generated when the at least one video material clip is uploaded.

The feature information of the user in the embodiments may include an attribute information of the user and/or a label information selected by the user.

The platform of generating the short video in the embodiments may be an intelligent platform, the user may register before using the platform. When registering, the user may fill in an account, a password, an age, an occupation, a hobby, a gender, etc. Moreover, the user may watch his or her own short videos or others' short videos on the platform, and the platform may record a category of a history short video watched by the user. In addition, information of generating all history short videos by the user on the platform, such as a history label information used by the user in generating a history short video, is further recorded. The label information in the embodiments refers to a group of labels for generating a video production, and there may be one, two or more labels.

For example, the label information in the embodiments may include at least one of a topic of the short video, a music style of the short video, a transition mode of the short video, a filter style adopted by the short video and a clipping mode of the short video. The topic of the short video may include sports, home life, food, tourism, pets, etc. Each topic may correspond to a certain special processing manner, such as adding a corresponding special effect, adjusting a corresponding color, adjusting a corresponding playing speed, etc. The transition mode of the short video refers to a connection mode between videos of two venues. For example, the transition mode may be entering directly, entering from a specified direction, entering from the inside out, entering from the outside in, etc. The filter used in the short video of the embodiments may include original, soft, white, food, time, city, etc. Each kind of filter may be processed using a corresponding processing manner in the platform, so as to achieve a corresponding effect. The clipping mode in the embodiments specifically refers to a mode for clipping the video material intelligently, including highlighting a moving picture, highlighting a person, highlighting a scenery, highlighting a facial close-up, cutting a redundant scene, etc. A corresponding clipping model may be trained in advance for each clipping mode. When clipping the short video, the trained clipping model may cut each video material clip. Then the video material may be clipped based on a requirement of the corresponding clipping mode, such as highlighting the moving picture, highlighting the person, highlighting the scenery, highlighting the facial close-up or cutting the redundant scene.

It should be noted that the embodiments further includes following operations. Several video material clips are collected. Manually labeled training video clips are obtained by clipping each of the video material clips under each clipping mode. For each clipping mode, the corresponding clipping model is trained by using each of the video material clips and training video clips obtained by clipping each of the video material clips under said clipping mode. In this manner, the clipping models corresponding to each clipping mode may be pre-trained and stored in the platform of generating a short video. When implementing a certain clipping mode, a video material clip is input into a clipping model corresponding to the certain clipping mode, so that the clipping model may output a video material clip clipped under the clipping mode.

It may be seen from the above that the attribute information of the user in the embodiments may include at least one of an age of the user, an occupation of the user, a gender of the user, a category of a history short video watched by the user and a history label information used by the user in generating a history short video.

In addition, the label prediction model may be pre-trained in the platform of generating a short video in the embodiments. Training attribute information of several users may be collected. Manually labeled training label information corresponding to training attribute information of each of the several users is obtained. The label prediction model is trained by using the training attribute information of each of the several users and corresponding label information. The trained label prediction model is stored in the platform of generating a short video. The predicted label information may be output according to an attribute information of a user. Similarly, the predicted label information may include one, two or more predicted labels.

In the embodiment, the platform of generating a short video may determine a target label information for generating the short video according to the feature information of the user. Then the platform may process the at least one video material clip according to the target label information, so as to generate the short video. That is, processing manners corresponding to each label are recorded in the platform. After the target label information is determined, the at least one video material clip is processed according to the processing manners of each label in the target label information, so as to generate the short video.

According to the method of generating a short video in the embodiments, the at least one video material clip uploaded by the user is received. The feature information of the user is obtained. The short video is generated based on the at least one video material clip, according to the feature information of the user. The technical solution of the present disclosure may overcome shortcomings of existing technologies, by generating the short video (such as the vlog video) automatically and intelligently on the platform of generating a short video. This process does not need manual participation and has no requirement on the level of the generator, and may effectively shorten the generation time of the short video and improve the generation efficiency of the short video.

FIG. 2 shows a schematic diagram according to some embodiments of the present disclosure. As shown in FIG. 2, in the embodiments, it is assumed that the feature information of the user only includes the attribute information of the user, for example. The method of generating a short video in the embodiments may include following operations specifically.

In operation S201, at least one video material clip uploaded by the user is received.

In operation S202, an attribute information of an user is obtained.

As shown in the embodiments above, the attribute information of the user may include at least one of the age of the user, the occupation of the user, the gender of the user, the category of a history short video watched by the user and the history label information used by the user in generating a history short video.

In operation S203, a predicted label information for generating the short video is generated by performing a prediction according to the attribute information of the user and the pre-trained label prediction model.

In operation S204, the short video is generated based on the at least one video material clip, according to the predicted label information.

Similarly, the predicted label information in the embodiments may include at least one of the topic of the short video, the music style of the short video, the transition mode of the short video, the filter style adopted by the short video and the clipping mode of the short video.

The platform of generating a short video in the embodiments may process the processing manner corresponding to each label. After the predicted label information is determined, the platform may process the at least one video material clip based on each label in the predicted label information, so as to generate the short video.

For example, if the predicted label information includes the topic, then each video material clip may be processed using the corresponding special effect of the topic, the corresponding color of the topic, the corresponding playing speed of the topic, etc. If the predicted label information includes the music style of the short video, then a piece of music may be obtained from a music library corresponding to the music style as the music of the short video. If the predicted label information includes the transition mode of the short video, then adjacent video material clips may be connected using the transition mode. If the predicted label information includes the filter style, then all video material clips are filtered by a corresponding filter. If the predicted label information includes the clipping mode, then each video clip is clipped using the corresponding clipping model. After the process above, a corresponding short video may be generated. In practical application, for label information that is not adopted, the corresponding processing manner is not used.

In a scenario of the embodiments, the user logs into the platform of generating a short video through a terminal. A user upload interface is displayed on the platform to the terminal of the user, so that the user may upload the at least one video material clip on the interface. Furthermore, the user may be reminded to select a label information on the interface. If the user refuses to select a label, then the platform may prompt the user on the interface that the attribute information of the user will be used to generate the short video. If the user agrees, then the platform may generate the short video based on the information above.

According to the method of generating a short video in the embodiments, a predicted label information for generating the short video may be generated, by performing a prediction according to the attribute information of the user and the pre-trained label prediction model; and at least one video material clip may be processed to generate the short video according to the predicted label information. This may overcome shortcomings of existing technologies, by generating the short video (such as the vlog video) automatically and intelligently on the platform of generating a short video. This process does not need manual participation and has no requirement on the level of the generator, and may effectively shorten the generation time of the short video and improve the generation efficiency of the short video.

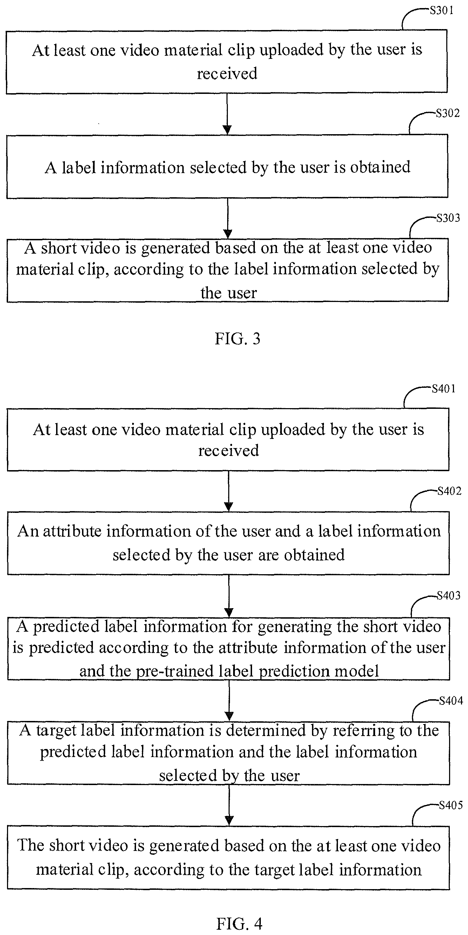

FIG. 3 shows a schematic diagram according to some embodiments of the present disclosure. As shown in FIG. 3, in the embodiments, it is assumed that the feature information of the user only includes the label information selected by the user, for example. The method of generating a short video in the embodiments may include following operations specifically.

In operation S301, at least one video material clip uploaded by the user is received.

In operation S302, a label information selected by the user is obtained.

As described in the embodiments above, the label information selected by the user in the embodiments may include at least one of the topic of the short video, the music style of the short video, the transition mode of the short video, the filter style adopted by the short video and the clipping mode of the short video.

In operation S303, a short video is generated based on the at least one video material clip, according to the label information selected by the user.

Specifically, the label information selected by the user in the embodiments is a final target label information. The at least one video material clip may be processed according to the target label information, so as to generate the short video.

Similarly, in a scenario of the embodiments, the user logs into the platform of generating a short video through a terminal. The user upload interface is displayed on the platform to the terminal of the user, so that the user may upload the at least one video material clip on the interface. Furthermore, the user may be reminded to select a label information on the interface. The user may select one, two or more labels according to the reminder. The platform may further prompt the user whether to use the attribute information together with the label information selected by the user to generate the short video. If the user rejects, then the platform may generate the short video based on the at least one video material clip according to the label information selected by the user only.

According to the method of generating a short video in the embodiments, the at least one video material clip uploaded by the user may be processed to generate the short video according to the label information selected by the user. This may overcome shortcomings of existing technologies, by generating the short video (such as the vlog video) automatically and intelligently on the platform of generating a short video. This process does not need manual participation and has no requirement on the level of the generator, and may effectively shorten the generation time of the short video and improve the generation efficiency of the short video.

FIG. 4 shows a schematic diagram according to some embodiments of the present disclosure. As shown in FIG. 4, in the embodiments, it is assumed that the feature information of the user includes both the attribute information of the user and the label information selected by the user. The method of generating a short video in the embodiments may include following operations specifically.

In operation S401, at least one video material clip uploaded by the user is received.

In operation S402, an attribute information of the user and a label information selected by the user are obtained.

The attribute information of the user and the label information selected by the user are shown in the embodiments above, and will not be repeated here.

In operation S403, a predicted label information for generating the short video is generated by performing a prediction according to the attribute information of the user and the pre-trained label prediction model.

In operation S404, a target label information is determined by referring to the predicted label information and the label information selected by the user.

Specifically, in the embodiments, the predicted label information may include a plurality of labels, and the label information selected by the user may further include a plurality of labels. In the embodiments, if there is a conflict between the labels in the predicted label information and the label information selected by the user, then the label information selected by the user shall prevail, such that the final target label information may be obtained. For example, if the transition mode in the predicted label information according to the attribute information of the user is mode 1, and the transition mode in the label information selected by the user is mode 2, then the transition mode in the final target label information is mode 2. In addition, labels without conflict (such as labels that exist in the predicted label information but do not exist in the label information selected by the user, or labels that do not exist in the predicted label information but exist in the label information selected by the user) are retained in the target label information.

In operation S405, the short video is generated based on the at least one video material clip, according to the target label information.

That is, the at least one video material clip may be processed according to the target label information, so as to generate the short video.

In a scenario of the embodiments, the user logs into the platform of generating a short video through a terminal. The user upload interface is displayed on the platform to the terminal of the user, so that the user may upload the at least one video material clip on the interface. Furthermore, the user may be reminded to select a label information on the interface. The user may select one, two or more labels according to the reminder. The platform may further prompt the user whether to use the attribute information together with the label information selected by the user to generate the short video. If the user agrees, then the platform may generate the short video based on the attribute information of the user and the label information selected by the user.

According to the method of generating a short video in the embodiments, the at least one video material clip uploaded by the user may be processed to generate the short video according to the attribute information of the user and the label information selected by the user. This may overcome shortcomings of existing technologies, by generating the short video (such as the vlog video) automatically and intelligently on the platform of generating a short video. This process does not need manual participation and has no requirement on the level of the generator, and may effectively shorten the generation time of the short video and improve the generation efficiency of the short video.

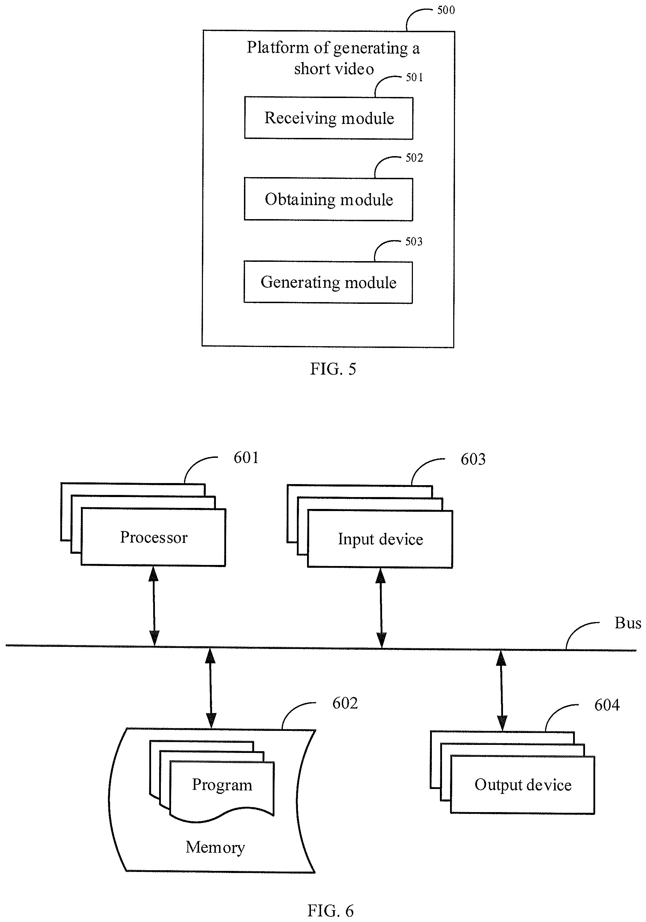

FIG. 5 shows a schematic diagram according to some embodiments of the present disclosure. As shown in FIG. 5, the platform 500 of generating a short video in the embodiments may include a receiving module 501, an obtaining module 502, and a generating module 503.

The receiving module 501 is used to receive at least one video material clip.

The obtaining module 502 is used to obtain a feature information of a user.

The generating module 503 is used to generate the short video based on the at least one video material clip, according to the feature information of the user.

In an example, in the platform 500 of generating a short video in the embodiments, the generating module 503 is used to generate, in case of the feature information of the user containing an attribute information of the user, a predicted label information for generating the short video, by performing a prediction according to the attribute information of the user and a pre-trained label prediction model; and generate the short video based on the at least one video material clip, according to the predicted label information.

In another example, the generating module 503 is used to generate, in case of the feature information of the user containing a label information selected by the user, the short video based on the at least one video material clip, according to the label information selected by the user.

In another example, the generating module 503 is used to generate, in case of the feature information of the user containing an attribute information of the user and a label information selected by the user, a predicted label information for generating the short video by performing a prediction according to the attribute information of the user and a pre-trained label prediction model; determine a target label information, by referring to the predicted label information and the label information selected by the user; and generate the short video based on the at least one video material clip, according to the target label information.

In another example, in the platform 500 of generating a short video in the embodiments, the attribute information of the user includes at least one of an age of the user, an occupation of the user, a gender of the user, a category of a history short video watched by the user and a history label information used by the user in generating a history short video.

In another example, in the platform 500 of generating a short video in the embodiments, the label information selected by the user includes at least one of a topic of the short video, a music style of the short video, a transition mode of the short video, a filter style adopted by the short video and a clipping mode of the short video.

In another example, the platform 500 of generating a short video in the embodiments may further include a training module. The training module is used to train a label prediction model and clipping models corresponding to each clipping mode. Details may refer to relevant descriptions in the method embodiments above, and will not be repeated here.

According to the platform 500 of generating a short video in the embodiments, the modules above are used to realize the principle and technical effects in generating a short video, which is same as the implementation of the relevant method embodiments above. Details may refer to relevant descriptions in the method embodiments above, and will not be repeated here.

According to the embodiments of the present disclosure, the present disclosure further provides an electronic device and a readable storage medium.

FIG. 6 shows a block diagram of an electronic device of implementing the method of generating a short video according to the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device may include one or more processors 601, a memory 602, and interface(s) for connecting various components, including high-speed interface(s) and low-speed interface(s). The various components are connected to each other by using different buses, and may be installed on a common motherboard or installed in other manners as required. The processor may process instructions executed in the electronic device, including instructions stored in or on the memory to display graphical information of GUI (Graphical User Interface) on an external input/output device (such as a display device coupled to an interface). In other embodiments, a plurality of processors and/or a plurality of buses may be used with a plurality of memories, if necessary. Similarly, a plurality of electronic devices may be connected in such a manner that each device provides a part of necessary operations (for example, as a server array, a group of blade servers, or a multi-processor system). In FIG. 6, a processor 601 is illustrated by way of example.

The memory 602 is a non-transitory computer-readable storage medium provided by the present disclosure. The memory stores instructions executable by at least one processor, to cause the at least one processor to implement the method provided in the present disclosure. The non-transitory computer-readable storage medium of the present disclosure stores computer instructions for allowing a computer to implement the method provided in the present disclosure.

The memory 602, as a non-transitory computer-readable storage medium, may be used to store non-transitory software programs, non-transitory computer-executable programs and modules, such as program instructions/modules (such as relevant modules shown in FIG. 5) corresponding to the method in the embodiments of the present disclosure. The processor 601 executes various functional applications and data processing of the server by executing the non-transient software programs, instructions and modules stored in the memory 602, thereby implementing the method in the embodiments of the method mentioned above.

The memory 602 may include a program storage area and a data storage area. The program storage area may store an operating system and an application program required by at least one function. The data storage area may store data etc. generated by using the electronic device according to the method. In addition, the memory 602 may include a high-speed random access memory, and may further include a non-transitory memory, such as at least one magnetic disk storage device, a flash memory device, or other non-transitory solid-state storage devices. In some embodiments, the memory 602 may optionally include a memory provided remotely with respect to the processor 601, and such remote memory may be connected through a network to the electronic device. Examples of the above-mentioned network include, but are not limited to the Internet, intranet, local area network, mobile communication network, and combination thereof.

The electronic device for verifying validation may further include an input device 603 and an output device 604. The processor 601, the memory 602, the input device 603 and the output device 604 may be connected by a bus or in other manners. In FIG. 6, the connection by a bus is illustrated by way of example.

The input device 603 may receive input information of numbers or character, and generate key input signals related to user settings and function control of the electronic device, such as a touch screen, a keypad, a mouse, a track pad, a touchpad, a pointing stick, one or more mouse buttons, a trackball, a joystick, and so on. The output device 604 may include a display device, an auxiliary lighting device (such as LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

These computing programs (also referred to as programs, software, software applications, or codes) contain machine instructions for a programmable processor, and may be implemented using high-level programming languages, object-oriented programming languages, and/or assembly/machine languages. As used herein, the terms "machine-readable medium" and "computer-readable medium" refer to any computer program product, apparatus and/or device (for example, magnetic disk, optical disk, memory, programmable logic device (PLD)) for providing machine instructions and/or data to a programmable processor, including a machine-readable medium for receiving machine instructions as machine-readable signals. The term "machine-readable signal" refers to any signal for providing machine instructions and/or data to a programmable processor.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the systems and technologies described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

According to the technical solution of the present disclosure, at least one video material clip uploaded by a user is received. The feature information of the user is obtained. The short video is generated based on the at least one video material clip, according to the feature information of the user. The technical solution of the present disclosure may overcome shortcomings of existing technologies, by generating the short video (such as the vlog video) automatically and intelligently on the platform of generating a short video. This process does not need manual participation and has no requirement on the level of the generator, and may effectively shorten the generation time of the short video and improve the generation efficiency of the short video.

Furthermore, according to the technical solution of the present disclosure, if the feature information of the user only contains the attribute information of the user, a predicted label information for generating the short video may be generated by performing a prediction according to the attribute information of the user and the pre-trained label prediction model; and the at least one video material clip may be processed to generate the short video according to the predicted label information. It is also possible to generate the short video (such as the vlog video) automatically and intelligently on the platform of generating a short video, and may effectively shorten the generation time of the short video and improve the generation efficiency of the short video.

Furthermore, according to the technical solution of the present disclosure, if the feature information of the user only contains the label information selected by the user, then the at least one video material clip uploaded by the user may be processed to generate the short video according to the label information selected by the user. This may further generate the short video (such as the vlog video) automatically and intelligently on the platform of generating a short video, and may effectively shorten the generation time of the short video and improve the generation efficiency of the short video.

Furthermore, according to the technical solution of the present disclosure, if the feature information of the user contains the attribute information of the user and the label information selected by the user, then the at least one video material clip uploaded by the user may be processed to generate the short video according to the attribute information of the user and the label information selected by the user. This may further generate the short video (such as the vlog video) automatically and intelligently on the platform of generating a short video, and may effectively shorten the generation time of the short video and improve the generation efficiency of the short video.

It should be understood that operations of the processes illustrated above may be reordered, added or deleted in various manners. For example, the operations described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of generating a short video, comprising:
receiving at least one video material clip;
obtaining a feature information of a user; and
generating the short video based on the at least one video material clip, according to the feature information of the user.

2. The method of claim 1, wherein in case of the feature information of the user containing an attribute information of the user, said generating the short video based on the at least one video material clip, according to the feature information of the user comprises:
generating a predicted label information for generating the short video, by performing a prediction according to the attribute information of the user and a pre-trained label prediction model; and
generating the short video based on the at least one video material clip, according to the predicted label information.

3. The method of claim 1, wherein in case of the feature information of the user containing a label information selected by the user, said generating the short video based on the at least one video material clip, according to the feature information of the user comprises:
generating the short video based on the at least one video material clip, according to the label information selected by the user.

4. The method of claim 1, wherein in case of the feature information of the user containing an attribute information of the user and a label information selected by the user, the generating the short video based on the at least one video material clip, according to the feature information of the user comprises:
generating a predicted label information for generating the short video, by performing a prediction according to the attribute information of the user and a pre-trained label prediction model;
determining a target label information, by referring to the predicted label information and the label information selected by the user; and
generating the short video based on the at least one video material clip, according to the target label information.

5. The method of claim 2 or 4, wherein the attribute information of the user comprises at least one of an age of the user, an occupation of the user, a gender of the user, a category of a history short video watched by the user and a history label information used by the user in generating a history short video.

6. The method of claim 3 or 4, wherein the label information selected by the user comprises at least one of a topic of the short video, a music style of the short video, a transition mode of the short video, a filter style adopted by the short video and a clipping mode of the short video.

7. A platform of generating a short video, comprising:
a receiving module, configured to receive at least one video material clip;
an obtaining module, configured to obtain a feature information of a user; and
a generating module, configured to generate the short video based on the at least one video material clip, according to the feature information of the user.

8. The platform of claim 7, wherein the generating module is configured to:
generate, in case of the feature information of the user containing an attribute information of the user, a predicted label information for generating the short video, by performing a prediction according to the attribute information of the user and a pre-trained label prediction model; and
generate the short video based on the at least one video material clip, according to the predicted label information.

9. The platform of claim 7, wherein the generating module is configured to: generate, in case of the feature information of the user containing a label information selected by the user, the short video based on the at least one video material clip, according to the label information selected by the user.

10. The platform of claim 7, wherein the generating module is configured to:
generate, in case of the feature information of the user containing an attribute information of the user and a label information selected by the user, a predicted label information for generating the short video, by performing a prediction according to the attribute information of the user and a pre-trained label prediction model;
determine a target label information, by referring to the predicted label information and the label information selected by the user; and
generate the short video based on the at least one video material clip, according to the target label information.

11. The platform of claim 8 or 10, wherein the attribute information of the user comprises at least one of an age of the user, an occupation of the user, a gender of the user, a category of a history short video watched by the user and a history label information used by the user in generating a history short video.

12. The platform according to claim 9 or 10, wherein the label information selected by the user comprises at least one of a topic of the short video, a music style of the short video, a transition mode of the short video, a filter style adopted by the short video and a clipping mode of the short video.

13. An electronic device, comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 6.

14. A non-transitory computer-readable storage medium having computer instructions stored thereon, wherein the computer instructions allow a computer to implement the method of any one of claims 1 to 6.
